(19) **Europäisches Patentamt European Patent Office Office européen des brevets**

(11) **EP 4 234 627 B1**

(12) **EUROPEAN PATENT SPECIFICATION**

(45) Date of publication and mention
of the grant of the patent:
**04.12.2024  Bulletin 2024/49**

(21) Application number: **22158895.7**

(22) Date of filing: **25.02.2022**

(51) International Patent Classification (IPC):
**C08L 23/06** (2006.01)     **C08F 210/16** (2006.01)

(52) Cooperative Patent Classification (CPC):
(C-Sets available)
**C08F 210/16; C08L 23/06;** C08L 2203/10;
C08L 2203/16; C08L 2314/02     (Cont.)

(54) **A POLYETHYLENE COMPOSITION WITH IMPROVED STIFFNESS AND TOUGHNESS**

POLYETHYLENZUSAMMENSETZUNG MIT VERBESSERTER STEIFIGKEIT UND ZÄHIGKEIT

COMPOSITION DE POLYÉTHYLÈNE AVEC UNE RIGIDITÉ ET UNE RÉSISTANCE AMÉLIORÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.08.2023  Bulletin 2023/35**

(73) Proprietor: **Borealis AG**
**1020 Vienna (AT)**

(72) Inventors:
 • **WANG, Jingbo**
  **4021 Linz (AT)**
 • **BERGER, Friedrich**
  **4021 Linz (AT)**
 • **ALABRUNE, Arnaud**
  **92400 Courbevoie (FR)**
 • **POTTER, Elisabeth**
  **4021 Linz (AT)**
 • **AHO, Jani**
  **06101 Porvoo (FI)**

(74) Representative: **Kador & Partner Part mbB**
**Corneliusstraße 15**
**80469 München (DE)**

(56) References cited:
**EP-A1- 1 655 334**     **EP-A1- 2 894 195**
**WO-A1-2017/093390**     **WO-A1-2020/109289**

Remarks:
The file contains technical information submitted after the application was filed and not included in this specification

(52) Cooperative Patent Classification (CPC): (Cont.)

C-Sets
**C08F 210/16, C08F 2/001;**
**C08F 210/16, C08F 4/6492;**
**C08F 210/16, C08F 4/6555;**
**C08L 23/06, C08L 23/0815;**
C08F 110/02, C08F 2500/07, C08F 2500/12;
C08F 210/16, C08F 210/08, C08F 2500/07,
C08F 2500/12, C08F 2500/26

**Description**

**Field of the invention**

The present invention relates to a polyethylene composition, which is suitable for moulded articles and films. The present invention also relates to the process for the production of said polyethylene composition, an article comprising said polyethylene composition and the use of said polyethylene composition for the production of a moulded article or a film.

**Background**

Injection moulding may be used to make a wide variety of articles including articles having relatively complex shapes and a range of sizes. Injection moulding is, for instance, suited to the manufacture of articles used as caps and closures for food and drink applications, such as for bottles containing carbonated or noncarbonated drinks, or for non-food applications like containers for cosmetics and pharmaceuticals. Injection moulding is for example also used for the production of bottles.

Injection moulding is a moulding process in which a polymer is melted and then filled into a mould by injection. During initial injection, high pressure is used and the polymer melt is compressed. Thus, upon injection into the mould the polymer melt initially expands or "relaxes" to fill the mould. The mould, however, is at a lower temperature than the polymer melt, and therefore as the polymer melt cools, shrinkage tends to occur. To compensate for this effect, back pressure is applied. Thereafter the polymer melt is cooled further to enable the moulded article to be removed from the mould without causing deformation.

Polymer films are also widely used in packaging. These films must obviously protect the contents of the package from damage and the environment.

Sustainability is becoming more and more important in the production of moulded articles and films. Hence, it is a general ambition to reduce the amount of material needed to provide an article or film with the same properties. Reduced amounts of material used result in less energy consumption in production and transport as well as generally less waste material per article or film. Furthermore, reducing the amount of material per article or film has also the effect of reducing costs. Generally, this can be achieved by producing articles and films with lower thickness. However, this usually has the drawback that certain physical properties are sacrificed. Strength is the ability of a material to stay together when stretched or compressed. Stiffness is how well a material resists deformation. Toughness is the ability of a material to absorb energy before failure. Hence, to produce an article or film, which uses less polyethylene composition material, the strength, stiffness, and toughness of said polyethylene composition needs to be improved. To add to the challenge, however, these improvements must not be at the expense of processability of the polymer or the appearance of any article or film formed. Processability must be maintained or even improved to meet customer needs. Injection moulded articles are produced rapidly and any reduction in processability can increase cycle times and hence reduce process efficiency.

Multimodal high density polyethylene polymers for cap and closure applications are typically prepared in a two stage process, as described in, for example, WO 2014/180989 A1 and WO 2017/093390 A1. These methods may be preceded by a prepolymerization step. However, such produced materials suffer from relatively low densities and a not well-balanced combination of stiffness and toughness.

In particular, WO 2017/093390 A1 discloses a multimodal ethylene polymer having (A) a LMW homopolymer component and (B) a HMW ethylene copolymer component. Component (A) has a $MFR_2$ of 400 g/10 min and a density of 970 kg/m$^3$, whereas component (B) has a $MFR_2$ of 0.8 g/10 min and a density of 955.8 kg/m$^3$.

WO 2019/229209 A1 employs at least a three stage polymerization process, optionally preceded by a prepolymerization step, leading to the production of polymers, specifically high density polyethylene homopolymers, which have an improved balance of processability and mechanical properties, such as ESCR and stiffness. However, also these materials exhibit low densities and improvable stiffness.

**Object of the invention**

It is therefore an object of the present invention to find a polyethylene composition for the production of articles or films, which overcomes the above-mentioned problems, i.e. having improved stiffness and toughness at maintained processability to allow for the production of articles or films having comparable physical properties but lower weight, i.e. lower amount of said polyethylene composition. It is a further object of the present invention to provide a process to produce said polyethylene composition and an article made from said polyethylene composition.

**Summary of the invention**

It has surprisingly found that above-mentioned problem is solved by an at least bimodal polyethylene composition which has two polyethylene fractions having carefully selected ranges for weight, density and melt flow rate.

The present invention therefore is directed to a polyethylene composition comprising a base resin comprising

(A) 70 to 30 wt.-% of a polyethylene homo- or copolymer fraction with respect to the total weight of the base resin having a density determined according to ISO 1183-1:2004 (method A) of 955 to 980 kg/m$^3$ and a MFR$_2$ determined according to ISO 1133 at 190 °C and a load of 2.16 kg of 50 to 600 g/10 min;

(B) 30 to 70 wt.-% of a polyethylene homo- or copolymer fraction with respect to the total weight of the base resin having a density determined according to ISO 1183-1:2004 (method A) of 947 to 970 kg/m$^3$ and a MFR$_2$ determined according to ISO 1133 at 190 °C and a load of 2.16 kg of 0.0001 to 1.0 g/10 min;

wherein the average molecular weight of fraction (A) is lower than the average molecular weight of the base resin;

wherein the sum of the amounts of fraction (A) and fraction (B) is 100 wt.-% with respect to the total weight of the base resin,

wherein the base resin has a density determined according to ISO 1183-1:2004 (method A) of 957 to 970 kg/m$^3$.

The present invention is further concerned with a process for producing said polyethylene composition wherein the base resin is produced in a multi-stage polymerization process in the presence of a Ziegler-Natta catalyst.

Moreover, the present invention also relates to an article comprising said polyethylene composition and to the use of said polyethylene composition for producing an article.

**Detailed description of the invention**

In the following, the present invention is described in detail, in particular, the polyethylene composition, the process for preparing the polyethylene composition and the article made from the ethylene composition.

Polyethylene composition

It has been found that the polyethylene composition according to the present invention provides an improved material for articles, such as films, which combines very good mechanical properties e.g. stiffness and toughness, with excellent processability.

The polyethylene composition of the present invention comprises a base resin comprising

(A) 70 to 30 wt.-% of a polyethylene homo- or copolymer fraction with respect to the total weight of the base resin having a density determined according to ISO 1183-1:2004 (method A) of 955 to 980 kg/m$^3$ and a MFR$_2$ determined according to ISO 1133 at 190 °C and a load of 2.16 kg of 50 to 600 g/10 min;

(B) 30 to 70 wt.-% of a polyethylene homo- or copolymer fraction with respect to the total weight of the base resin having a density determined according to ISO 1183-1:2004 (method A) of 947 to 970 kg/m$^3$ and a MFR$_2$ determined according to ISO 1133 at 190 °C and a load of 2.16 kg of 0.0001 to 1.0 g/10 min;

wherein the average molecular weight of fraction (A) is lower than the average molecular weight of the base resin;

wherein the sum of the amounts of fraction (A) and fraction (B) is 100 wt.-% with respect to the total weight of the base resin,

wherein the base resin has a density determined according to ISO 1183-1:2004 (method A) of 957 to 970 kg/m$^3$.

By ethylene homopolymer is meant a polymer having mainly ethylene monomer units. Such polymer may contain up to 1 mol-% comonomer units, due to the fact that during polymerization some impurities may be present. Preferably, the homopolymer contains no comonomer units.

By ethylene copolymer is meant a polymer the majority by weight of which derives from ethylene monomer units, i.e. at least 50 wt.-% ethylene relative to the total weight of the copolymer. The comonomer contribution preferably is up to 10 mol-%, more preferably up to 5 mol-%. Ideally however there are very low levels of comonomer present in the polymers of the present invention such as maximum of 2.0 mol-%. The other copolymerizable monomer or monomers are preferably C3-12, especially C3-10, alpha olefin comonomers, particularly singly or multiply ethylenically unsaturated comonomers, in particular C3-10-alpha olefins such as propene, 1-butene, 1-hexene, 1-octene, and 4-methyl-pent-1-ene. The use of 1-hexene, 1-octene and 1-butene is particularly preferred, especially 1-butene. Ideally, there is only one comonomer present.

The polyethylene composition according to the present invention is multimodal, comprising at least two fractions. Usually, a polyethylene composition comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions the composition is consisting of.

The form of the molecular weight distribution curve, i.e. the appearance of the graph of the polymer weight fraction as a function of its molecular weight, of such a multimodal polyethylene will show two or more maxima or at least be distinctly broadened in comparison with the curves for the individual fractions. It should be understood that the present invention is not limited to a bimodal polyethylene composition, but can also have three or even more differing fractions.

Preferably, however, the polyethylene composition is a bimodal polyethylene composition.

Hence, the base resin of the polyethylene composition comprises, preferably consists of, two fractions (A) and (B). Preferably, the polyethylene composition consists of the base resin.

*Fraction (A)*

Fraction (A) is a polyethylene homo- or copolymer, preferably a polyethylene homopolymer.

Fraction (A) preferably has a density, which is higher than the density of fraction (B).

The density of fraction (A) is in the range of 955 to 980 $kg/m^3$, preferably of 960 to 975 $kg/m^3$, and most preferably of 968 to 972 $kg/m^3$.

The fraction (A) has a melt flow rate $MFR_2$ of 50 to 600 g/10 min. Preferably, the fraction (A) has an $MFR_2$ of 500 g/10 min or less, more preferably 450 g/10 min or less, and most preferably 400 g/10 min or less. The fraction (A) preferably has a minimum $MFR_2$ of 100 g/10 min, more preferably at least 150 g/10 min, and most preferably at least 200 g/10 min. Thus, particularly suitable values of $MFR_2$ for fraction (A) are from 150 to 450 g/10 min, such as 200 to 400 g/10 min.

The fraction (A) is present in the base resin in an amount of 70 to 30 wt.-% with respect to the total weight of the base resin, preferably in an amount of 60 to 35 wt.-%, and most preferably in an amount of 50 to 40 wt.-%.

*Fraction (B)*

Fraction (B) is a polyethylene homo- or copolymer, preferably a polyethylene copolymer. If fraction (B) is a polyethylene copolymer, the comonomer is preferably selected from the list consisting of 1-hexene, 1-octene and 1-butene. 1-butene is the most preferred comonomer.

Fraction (B) preferably has a density, which is lower than the density of fraction (A).

The density of fraction (B) is in the range of 947 to 970 $kg/m^3$, preferably of 949 to 960 $kg/m^3$, and most preferably of 951 to 955 $kg/m^3$.

The fraction (B) has a melt flow rate $MFR_2$ of 0.0001 to 1.0 g/10 min. Preferably, the fraction (B) has an $MFR_2$ of 0.8 g/10 min or less, more preferably 0.1 g/10 min or less, and most preferably 0.05 g/10 min or less. The fraction (B) preferably has a minimum $MFR_2$ of 0.001 g/10 min, more preferably at least 0.002 g/10 min, and most preferably at least 0.005 g/10 min. Thus, particularly suitable values of $MFR_2$ for fraction (B) are from 0.002 to 0.1 g/10 min, such as 0.005 to 0.05 g/10 min, most preferably even 0.01 to 0.04 g/10 min.

The fraction (B) is present in the base resin in an amount of 30 to 70 wt.-% with respect to the total weight of the base resin, preferably in an amount of 40 to 65 wt.-%, and most preferably in an amount of 50 to 60 wt.-%.

Preferably, the combined fractions (A) and (B) and fraction (B) are preferably present in the base resin in a weight ratio from 70:30 to 30:70, more preferably from 60:40 to 35:65, and most preferably from 50:50 to 40:60.

Base *resin*

The density of base resin is in the range of 957 to 970 $kg/m^3$; and preferably of 958 to 962 $kg/m^3$. The density of base resin may also be in the range of 957 to 965 $kg/m^3$. Hence, preferably, the base resin is a high density base resin. If the density is lower than this range, the physical properties as needed for the articles and films will be impaired, i.e. the film becomes too soft. If the density is higher than this range, the articles may become too heavy.

The base resin has an $MFR_2$ of 4.0 g/10 min or less, preferably 3.5 g/10 min or less, more preferably 2.0 g/10 min or less and most preferably 1.9 g/10 min or less. The base resin has a minimum $MFR_2$ of 0.9 g/10 min, preferably at least 1.0 g/10 min, and most preferably at least 1.1 g/10 min. Thus, particularly suitable values of $MFR_2$ for base resin are from 1.0 to 3.5 g/10 min, such as 1.1 to 1.9 g/10 min.

Preferably, the base resin preferably has an $MFR_{21}$ of 150 g/10 min or less, more preferably 130 g/10 min or less, and most preferably 110 g/10 min or less. The base resin preferably has a minimum $MFR_{21}$ of 50 g/10 min, more preferably at least 80 g/10 min, and most preferably at least 90 g/10 min. Thus, particularly suitable values of $MFR_{21}$ for base resin are from 80 to 130 g/10 min, such as 90 to 110 g/10 min.

Preferably, the base resin preferably has an $FRR_{21/2}$ of 75 or less, more preferably 70 or less, and most preferably 65 or less. The base resin preferably has a minimum $FRR_{21/2}$ of 35, more preferably at least 45, and most preferably at least 55. Thus, particularly suitable values of $FRR_{21/2}$ for base resin are from 45 to 70, such as 55 to 65.

In a preferred embodiment of the invention, the difference between the density of the fraction (A) and the fraction (B) is between 0.1 and 30 kg/m$^3$, more preferably between 5 and 25 kg/m$^3$, and most preferably between 10 and 20 kg/m$^3$. Density differences above these upper ranges can lead to compatibility problems between the fractions.

The base resin preferably has a z molecular weight Mz of 300,000 to 900,000 g/mol, more preferably of 550,000 to 750,000 g/mol, and most preferably of 560,000 to 600,000 g/mol. Likewise, the base resin preferably has a weight average molecular weight Mw of 90,000 to 200,000 g/mol, more preferably of 100,000 to 150,000 g/mol, and most preferably of 105,000 to 120,000 g/mol. The base resin preferably has a ratio of Mz/Mw of from 3 to 40, preferably from 4 to 20, and most preferably from 5 to 10, such as from 5 to 5.4.

The tensile modulus of the base resin preferably is more than 920 MPa, more preferably more than 950 MPa, and most preferably of more than 1000 MPa. Typically, the tensile modulus of the base resin is not higher than 1300 MPa.

The tensile strength at break of the base resin is preferably more than 23 MPa, more preferably more than 24 MPa, and most preferably more than 25 MPa. Typically, the tensile strength at break of the base resin is not higher than 40 MPa.

The base resin of the present invention preferably has an elongation at break of more than 300%, more preferably more than 450%, and most preferably of more than 550%. Typically, the elongation at break of the base resin is not higher than 700%. If the elongation at break level is lower than these ranges, the stiffness properties are impaired.

The base resin further preferably has a Charpy Notched Impact Strength (NIS) at +23 °C of higher than 10.0 kJ/m$^2$, more preferably higher than 11.0 kJ/m$^2$, and most preferably equal to or higher than 12.0 kJ/m$^2$. Typically, the Charpy Notched Impact Strength (NIS) of the base resin is not higher than 100 kJ/m$^2$. Preferably not higher than 70 kJ/m$^2$, and most preferably not higher than 45 kJ/m$^2$. If the Charpy Notched Impact Strength (NIS) level is lower than these ranges, the toughness is impaired. <u>Process of the present invention</u>

The present invention furthermore relates to a process for producing a polyethylene composition in any one of the above-described embodiments wherein the base resin is produced in a multistage polymerization process in the presence of a Ziegler-Natta catalyst.

A multi-stage process as used herein is a process which makes use of at least two reactors, one for producing a lower molecular weight component and a second for producing a higher molecular weight component. These reactors may be employed in parallel, in which case the components must be mixed after production. More commonly, the reactors are employed in series, such that the products of one reactor are used as the starting material in the next reactor, e.g. one component is formed in the first reactor, the second is formed in the second reactor in the presence of the first component. In this way, the two components are more intimately mixed, since one is formed in the presence of the other.

The polymerization reactions used in each stage may involve conventional ethylene homopolymerization or copolymerization reactions, e.g. gas phase, slurry phase, liquid phase polymerizations, using conventional reactors, e.g. loop reactors, gas phase reactors, batch reactors, etc.

The polymerization may be carried out continuously or batchwise, preferably the polymerization is carried out continuously.

The multi-stage process can be any combination of liquid phase, slurry phase and gas phase processes.

In the preferred multistage process, the lower molecular weight fraction (A) and the higher molecular weight fraction (B) are produced in different polymerization steps, in any order.

The low molecular weight fraction (A) can be prepared in the first polymerization step and the high molecular weight fraction (B) in the second polymerization step. This can be referred to as the normal mode and is preferred.

If a fraction is produced in the first polymerization step, the melt flow rate of said fraction can be directly measured as described herein. If said fraction is produced in the second step, the melt flow rate of the said fraction can be calculated on the basis of the weight ratio of said fraction and the fraction taken from the preceding polymerization step and the molecular weight of the total polyethylene composition.

In addition, subtracting GPC curves, when fractions of each polymer are known is also possible for determining melt flow rate of the polymer produced in the second stage of a multi-stage polymerization process.

Preferably, the multistage process of the present invention is a slurry phase-gas phase process.

The slurry and gas phase stages may be carried out using any conventional reactors known in the art. A slurry phase polymerization may, for example, be carried out in a continuously stirred tank reactor; a batch-wise operating stirred tank reactor or a loop reactor. Preferably, slurry phase polymerization is carried out in a loop reactor. In such reactors, the slurry is circulated with a high velocity along a closed pipe by using a circulation pump. Loop reactors are generally known in the art and examples are given, for instance, in US 4,582,816 A, US 3,405,109 A, US 3,324,093 A, EP 479 186 A and US 5,391,654 A.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably, the gas phase reactor for the second polymerization step is a fluidized bed reactor.

In a preferred embodiment of the invention the fraction (A) is produced first and the fraction (B) is produced in the presence of fraction (A).

The resulting end product consists of an intimate mixture of the polymer fractions from the reactors, the different molecular-weight-distribution curves of these polymers together forming a molecular-weight-distribution curve having a broad maximum or several maxima, i.e. the end product is a multimodal polymer mixture.

It is preferred that the multimodal base resin of the polyethylene composition according to the invention is a bimodal polyethylene mixture consisting of polymer fractions (A) and (B), optionally further comprising a small pre-polymerization fraction. It is also preferred that this bimodal polymer mixture has been produced by polymerization as described above under different polymerization conditions in three or more polymerization reactors connected in series. Owing to the flexibility with respect to reaction conditions thus obtained, it is most preferred that the polymerization is carried out in a loop reactor/gas-phase reactor combination.

According to a preferred embodiment of the invention, the process comprises a slurry-phase polymerization stage and a gas-phase polymerization stage. One suitable reactor configuration comprises one slurry reactor, preferably loop reactor, and one gas-phase reactor.

The catalyst may be transferred into the polymerization zone by any means known in the art. It is thus possible to suspend the catalyst in a diluent and maintain it as homogeneous slurry. Especially preferred it is to use oil having a viscosity from 20 to 1500 mPa*s as diluent, as disclosed in WO 2006/063771 A1. It is also possible to mix the catalyst with a viscous mixture of grease and oil and feed the resultant paste into the polymerization zone. Further still, it is possible to let the catalyst settle and introduce portions of thus obtained catalyst mud into the polymerization zone in a manner disclosed, for instance, in EP 428 054 A1.

The polymerization in slurry usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amount of methane, ethane and/or butane.

The temperature in the slurry polymerization is typically from 40 to 115 °C, preferably from 60 to 110 °C and in particular from 70 to 100 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. It is especially preferred to conduct the polymerization in loop reactor. Hydrogen is fed, optionally, into the reactor to control the molecular weight of the polymer as known in the art.

Furthermore, one or more α-olefin comonomers may be added into the reactor to control the density and morphology of the polymer product. The actual amount of such hydrogen and comonomer feeds depends on the desired melt index (or molecular weight) and density (or comonomer content) of the resulting polymer.

The polymerization in gas-phase may be conducted in a fluidized bed reactor, in a fast-fluidized bed reactor or in a settled bed reactor or in any combination of these.

Typically, the fluidized bed or settled bed polymerization reactor is operated at a temperature within the range of from 50 to 100 °C, preferably from 65 to 90 °C. The pressure is suitably from 10 to 40 bar, preferably from 15 to 30 bar.

In addition, antistatic agent(s) may be introduced into the slurry and/or gas-phase reactor if needed.

The process may further comprise pre- and post-reactors.

The polymerization steps may be preceded by a pre-polymerization step. The pre-polymerization step may be conducted in slurry or in gas phase. Preferably, pre-polymerization is conducted in slurry, and especially in a loop reactor. The temperature in the pre-polymerization step is typically from 0 to 90 °C, preferably from 20 to 80 °C and more preferably from 30 to 70 °C.

The pressure is not critical and is typically from 1 to 150 bar, preferably from 10 to 100 bar.

The polymerization may be carried out continuously or batch wise, preferably the polymerization is carried out continuously.

In an example of the present process, polymerizing ethylene optionally with comonomers as herein discussed is accomplished in a multi-stage polymerization process comprising one slurry reactor and one gas-phase reactor.

A chain-transfer agent, preferably hydrogen, is added as required to the reactors, and preferably 10 to 400 moles of $H_2$ per one kmol of ethylene are added to the reactor, more preferably 50 to 330 moles of $H_2$ per one kmol of ethylene, when the fraction (A) is produced in this reactor, and 1 to 200 moles of $H_2$ per one kmol of ethylene, preferably 10 to 160 moles of $H_2$ per one kmol of ethylene, are added to the gas phase reactor when this reactor is producing the fraction (B).

The polymerization is conducted in the presence of an olefin polymerization catalyst. The catalyst preferably is a Ziegler-Natta (ZN) catalyst which generally comprises at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or a $MgCl_2$ based support. Preferably, the support is silica or a $MgCl_2$ based support.

Particularly preferred Ziegler-Natta catalysts are such as described in EP 1 378 528 A1, preferably Example 1.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. Especially preferred titanium compound is titanium tetrachloride.

The catalyst can be prepared by sequentially contacting the carrier with the above mentioned compounds, as described in EP 688 794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound, for example an aluminium compound on a magnesium dihalide, like magnesium dichloride. Such catalysts are disclosed, for instance, in WO 2005/118655, EP 810 235, WO 2014/096296 and WO 2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, and dimethylaluminium chloride. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1,000 mol/mol, preferably from 3 to 100 mol/mol and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, or isomers or mixtures thereof. Internal organic compounds are also often called as internal electron donors.

In a preferred embodiment of the invention, the polyethylene composition comprises further additives in amount of 3 wt.-% or less based on the total weight of the polyethylene composition, more preferred of 2.5 wt.-% or less, and most preferred of 2 wt.-% or less. Usually, the amount of additives in the polyethylene composition is not lower than 0.01 wt.-% or less.

The composition of the invention preferably is produced in a process comprising a compounding step, wherein the composition, i.e. the blend, which is typically obtained as a polyolefin base resin powder from the reactor, is extruded in an extruder and then pelletised to polymer pellets in a manner known in the art. The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In certain embodiments, in said extrusion step the SEI (specific energy input) of the extruder may be 100 kWh/ton to 400 kWh/ton, more preferably 150 kWh/ton to 300 kWh/ton.

The melt temperature in said extrusion step is preferably 200 °C to 300 °C, more preferably 230 °C to 270 °C.

Article of the present invention

The present invention furthermore relates to an article, preferably a moulded article or a film, comprising, or consisting of, the polyethylene composition in any one of the embodiments as herein described.
The invention also relates to the use of a polyethylene composition in any one of the embodiments as herein described for producing an article, preferably a film.
Unless explicitly described otherwise, the description of the present invention is to be understood so that one or more of any of the above described preferred embodiments of the invention can be combined with the invention described in its most general features.
In the following, the measurement and determination methods for the parameters as used herein are given and the present invention is further illustrated by way of example and comparative example.

**Examples**

Measurement methods

*a) Melt flow rate*

The melt flow rate (MFR) was determined according to ISO 1133 and is indicated in g/10 min. The higher the melt flow rate, the lower the viscosity of the polymer. The MFR is determined at 190 °C for polyethylene and at a loading of 2.16 kg ($MFR_2$), 5.00 kg (MFRs) or 21.6 kg ($MFR_{21}$).
The quantity FRR (flow rate ratio) is an indication of molecular weight distribution and denotes the ratio of flow rates at different loadings. Thus, $FRR_{21/2}$ denotes the value of $MFR_{21}/MFR_2$.

*b) Calculation of melt flow rate $MFR_2$ of polymer fractions:*

$$MFR_2 = 10^{\left[\frac{\log(MFR_{1+2}) - w_1 \, x \, \log(MFR_1)}{w_2}\right]}$$

wherein

$w_1$  is the weight fraction [wt.-%] of a polymer fraction 1,
$w_2$  is the weight fraction [wt.-%] of a polymer fraction 2,
$MFR_1$  is the melt flow rate $MFR_2$ (190 °C) [g/10 min] of the polymer fraction 1,
$MFR_{1+2}$  is the melt flow rate $MFR_2$ (190 °C) [g/10 min] of the combined fractions 1 and 2,
$MFR_2$  is the calculated melt flow rate $MFR_2$ (190 °C) [g/10 min] of the polymer fraction 2.

*c) Notched impact strength (NIS):*

The Charpy notched impact strength (NIS) was measured according to ISO 179 1eA at +23°C, using injection moulded bar test specimens of 80x10x4 $mm^3$ prepared in accordance with EN ISO 17855-2.

*d) Density*

Density of the polymer was measured according to ISO 1183-1:2004 (method A) on compression moulded specimen prepared according to EN ISO 1872-2 (Feb 2007) and is given in $kg/m^3$.

*e) Calculation of density of polymer fractions:*

$$\rho_2 = \frac{(\rho_{1+2} - \rho_1)\dfrac{1 - w_2}{100}}{w_2}$$

wherein

$w_2$     is the weight fraction [wt.-%] of a polymer fraction 2,
$\rho_1$     is the density [kg/m$^3$] of the polymer fraction 1,
$\rho_{1+2}$     is the density [kg/m$^3$] of the combined fractions 1 and 2,
$p_2$     is the calculated density [kg/m$^3$] of the polymer fraction 2.

*f) Molecular weight properties*

Molecular weight averages (Mz, Mw and Mn), Molecular weight distribution (MWD) and its broadness, described by polydispersity index, PDI=Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)}$$

$$M_w = \frac{\sum_{i=1}^{N} (A_i \, x \, M_i)}{\sum A_i}$$

$$M_z = \frac{\sum_{i=1}^{N} (A_i \, x \, M_i^2)}{\sum (A_i/M_i)}$$

For a constant elution interval $\Delta V_i$, where $A_i$ and $M_i$ are the chromatographic peak slice area and polyolefin molecular weight (MW).
A PolymerChar GPC instrument, equipped with infrared (IR) detector was used with 3x Olexis and 1x Olexis Guard columns from Polymer Laboratories and 1,2,4-trichlorobenzene (TCB, stabilized with 250 mg/l 2,6-Di-tert-butyl-4-methylphenol) as solvent at 160 °C and at a constant flow rate of 1 ml/min. 200 µL of sample solution were injected per analysis. The column set was calibrated using universal calibration (according to ISO 16014-2:2003) with at least 15 narrow MWD polystyrene (PS) standards in the range of 0.5 to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

*g) Tensile modulus, tensile strength and elongation at break*

The tensile properties (tensile modulus, tensile strength, elongation at break) were determined according to ISO 527-2 on 1A ISO 527-2 dogbones. Following the standard, a testspeed of 1 mm/min was used for tensile modulus and 50 mm/min for all other properties. The testing temperature was 23±2 °C. Injection moulding was carried out according to ISO 17855-2.

Materials

Polymerization conditions and properties of the produced base resins and polyethylene compositions of the inventive and comparative examples are shown in Tables 1 and 2, respectively.

*a) CE1*

CE1 is BorePure™ MB6561, which is a multimodal HDPE commercially available from Borealis AG with a density of 954 kg/m$^3$ and a MFR determined according to ISO 1133 at 190 °C and a load of 2.16 kg of 1.5 g/10 min.

*b) Catalyst A*

Catalyst A was prepared according to Example 1 of EP 1 378 528 A1.

*c) IE1-2*

The base polymers of IE1-2 were prepared in a Borstar pilot plant, with a reactor chain comprising a pre-polymerizing reactor, a loop reactor and a gas phase reactor. The reactor conditions such as temperature, pressure, and the concentration of monomers as provided in Table 1 were used.

*d) Extruding and pelletizing*

The base resins of the Inventive Examples IE1-2 and the Comparative Example CE1 were extruded and pelletized as described below.

The compounding was done under nitrogen atmosphere to pellets by using a JSW extruder so that the SEI was 230 kWh/kg and the melt temperature 250 °C. The IEs contain1000 ppm of Irganox B561 (BASF) and 400 ppm of Ceasit SW (Baerlocher) as antioxidants and acid scavenger, respectively.

Table 1

| Example | | IE1 | IE2 |
|---|---|---|---|
| Catalyst | | A | A |
| **Prepolymerization reactor** | | | |
| Temperature | °C | 70 | 70 |
| Pressure | kPa | 5682 | 5727 |
| **Loop reactor** | | | |
| Temperature | °C | 95 | 95 |
| Press. | kPa | 5367 | 5368 |
| C2 conc. | mol% | 4.0 | 4.1 |
| H2/C2 ratio | mol/kmol | 329 | 312 |
| Split | wt.-% | 47.4 | 44 |
| $MFR_2$ | g/10 min | 243 | 214 |
| **Gas phase reactor** | | | |
| Temp | °C | 85 | 85 |
| Pressure | kPa | 2000 | 2000 |
| H2/C2 ratio | mol/kmol | 155 | 142 |
| C4/C2 ratio | mol/kmol | 11 | 11 |
| Split | wt.-% | 52.6 | 56 |

Table 2

| | | IE1 | IE2 | CE1 |
|---|---|---|---|---|
| **Loop reactor (fraction (A))** | | | | |
| Density (A)[+] | kg/m$^3$ | 970.5 | 970 | 970 |
| $MFR_2$ (A)[+] | g/10 min | 243 | 214 | 400 |
| **Gas phase reactor (fraction (B))** | | | | |
| Density (B)[*] | kg/m$^3$ | 953.9 | 953.4 | 938.6 |

(continued)

| Gas phase reactor (fraction (B)) | | | | |
|---|---|---|---|---|
| MFR$_2$ (B)* | g/10 min | 0.021 | 0.031 | 0.007 |
| Split | wt.-% | 52.6 | 56.0 | 51.0 |
| **Extruder / Pelletizer** | | | | |
| Density (A+B)$^{+\#}$ | kg/m$^3$ | 961.8 | 960.7 | 954 |
| $\Delta$density(A-B) | kg/m$^3$ | 16.6 | 16.6 | 31.4 |
| MFR$_2$ (A+B)$^{+\#}$ | g/10 min | 1.8 | 1.5 | 1.5 |
| MFR$_{21}$ (A+B)$^{+\#}$ | g/10 min | 105 | 82 | 95 |
| FRR | | 57.1 | 54.1 | 63.3 |
| Mz$^\#$ | | 596500 | 566000 | 612500 |
| Mw$^\#$ | | 110000 | 113000 | 113500 |
| Mz/Mw$^\#$ | | 5.4 | 5.0 | 5.4 |
| Tensile Modulus | MPa | 1035 | 1007 | 920 |
| Tensile Strength | MPa | 25.6 | 25.2 | 22.9 |
| Elongation at break | % | 655 | 594 | 427 |
| NIS (+23 °C)$^\#$ | kJ/m$^2$ | 12 | 14 | 12 |
| * Calculated<br>$^+$ Measured<br>$^\#$ Measured from pellets | | | | |

IE2 is similar to CE1 except that IE2 is a bimodal resin wherein CE1 is multimodal. The values of Table 1 show that the inventive examples have in general higher stiffness and impact balance. In terms of toughness (NIS (+23°C)) IE1 has the same NIS as CE1, but higher elongation at break and therefore higher stiffness, showing the effect of the present invention. IE2 has exactly the same MFR$_2$ as CE1, but higher NIS, higher tensile modulus and higher elongation at break.

**Claims**

1.   A polyethylene composition comprising a base resin comprising

(A) 70 to 30 wt.-% of a polyethylene homo- or copolymer fraction with respect to the total weight of the base resin having a density determined according to ISO 1183-1:2004 (method A) of 955 to 980 kg/m$^3$ and a MFR$_2$ determined according to ISO 1133 at 190 °C and a load of 2.16 kg of 50 to 600 g/10 min;
(B) 30 to 70 wt.-% of a polyethylene homo- or copolymer fraction with respect to the total weight of the base resin having a density determined according to ISO 1183-1:2004 (method A) of 947 to 970 kg/m$^3$ and a MFR$_2$ determined according to ISO 1133 at 190 °C and a load of 2.16 kg of 0.0001 to 1.0 g/10 min;
wherein the average molecular weight of fraction (A) is lower than the average molecular weight of the base resin;
wherein the sum of the amounts of fraction (A) and fraction (B) is 100 wt.-% with respect to the total weight of the base resin;
wherein the base resin has a density determined according to ISO 1183-1:2004 (method A) of 957 to 970 kg/m$^3$.

2.   Polyethylene composition according to claim 1, wherein the base resin has a density determined according to ISO 1183-1:2004 (method A) of 958 to 962 kg/m$^3$.

3.   Polyethylene composition according to any one of the preceding claims, wherein the base resin has MFR$_2$ determined according to ISO 1133 at 190 °C and a load of 2.16 kg of 0.9 to 4.0 g/10 min.

4. Polyethylene composition according to any one of the preceding claims, wherein the difference between the density determined according to ISO 1183-1:2004 (method A) of the fraction (A) and the density determined according to ISO 1183-1:2004 (method A) of fraction (B) is between 0.1 and 30 $kg/m^3$.

5. Polyethylene composition according to any one of the preceding claims wherein the base resin has a z average molecular weight Mz of 300,000 to 900,000 g/mol.

6. Polyethylene composition according to any one of the preceding claims wherein the base resin has a weight average molecular weight Mw of 90,000 to 200,000 g/mol.

7. Polyethylene composition according to any one of the preceding claims wherein the base resin preferably has a ratio of Mz/Mw of from 3 to 40.

8. Polyethylene composition according to any one of the preceding claims, wherein the base resin has a tensile modulus determined according to ISO 527-2 of more than 920 MPa.

9. Polyethylene composition according to any one of the preceding claims, wherein the base resin has tensile strength at break determined according to ISO 527-2 of more than 23 MPa.

10. Polyethylene composition according to any one of the preceding claims, wherein the base resin has an elongation at break determined according to ISO 527-2 of more than 300.

11. Polyethylene composition according to any one of the preceding claims wherein the base resin has a Charpy Notched Impact Strength (NIS) at +23 °C determined according to ISO 179/1eA of higher than 10.0 $kJ/m^2$.

12. A process for producing a polyethylene composition according to any one of the preceding claims wherein the base resin is produced in a multi-stage polymerization process in the presence of a Ziegler-Natta catalyst.

13. An article comprising the polyethylene composition according to any one of claims 1 to 11.

14. The article according to claim 13 being a moulded article or a film.

15. Use of a polyethylene composition according to any one of claims 1 to 11 for producing an article, preferably a moulded article or a film.

**Patentansprüche**

1. Polyethylen-Zusammensetzung mit einem darin enthaltenen Basisharz, umfassend:

(A) 70 bis 30 Gew.-% einer Polyethylen-Homo- oder Copolymer-Fraktion in Bezug auf das Gesamtgewicht des Basisharzes mit einer Dichte, bestimmt gemäß ISO 1183-1:2004 (Methode A), von 955 bis 980 $kg/m^3$ und einer Schmelzflussrate ($MFR_2$), bestimmt gemäß ISO 1133 bei 190°C und einer Last von 2,16 kg, von 50 bis 600 g/10 min,

(B) 30 bis 70 Gew.-% einer Polyethylen-Homo- oder Copolymer-Fraktion in Bezug auf das Gesamtgewicht des Basisharzes mit einer Dichte, bestimmt gemäß ISO 1183-1:2004 (Methode A), von 947 bis 970 $kg/m^3$ und einer Schmelzflussrate ($MFR_2$), bestimmt gemäß ISO 1133 bei 190°C und einer Last von 2,16 kg, von 0,0001 bis 1,0 g/10 min,

wobei das durchschnittliche Molekulargewicht der Fraktion (A) niedriger ist als das durchschnittliche Molekulargewicht des Basisharzes,

wobei die Summe aus den Mengen der Fraktion (A) und der Fraktion (B) 100 Gew.-% in Bezug auf das Gesamtgewicht des Basisharzes beträgt,

wobei das Basisharz eine Dichte, bestimmt gemäß ISO 1183-1:2004 (Methode A), von 957 bis 970 $kg/m^3$ aufweist.

2. Polyethylen-Zusammensetzung nach Anspruch 1, wobei das Basisharz eine Dichte, bestimmt gemäß ISO 1183-1:2004 (Methode A), von 958 bis 962 $kg/m^3$ aufweist.

3. Polyethylen-Zusammensetzung nach einem der vorstehenden Ansprüche, wobei das Basisharz eine Schmelzfluss-rate (MFR$_2$), bestimmt gemäß ISO 1133 bei 190 °C und einer Last von 2,16 kg, von 0,9 bis 4,0 g/10 min aufweist.

4. Polyethylen-Zusammensetzung nach einem der vorstehenden Ansprüche, wobei die Differenz zwischen der Dichte, bestimmt gemäß ISO 1183-1:2004 (Methode A), der Fraktion (A) und der Dichte, bestimmt gemäß ISO 1183-1:2004 (Methode A), der Fraktion (B) zwischen 0,1 und 30 kg/m$^3$ beträgt.

5. Polyethylen-Zusammensetzung nach einem der vorstehenden Ansprüche, wobei das Basisharz ein z-mittleres Molekulargewicht Mz von 300.000 bis 900.000 g/mol aufweist.

6. Polyethylen-Zusammensetzung nach einem der vorstehenden Ansprüche, wobei das Basisharz ein gewichtsmittleres Molekulargewicht Mw von 90.000 bis 200.000 g/mol aufweist.

7. Polyethylen-Zusammensetzung nach einem der vorstehenden Ansprüche, wobei das Basisharz vorzugsweise ein Verhältnis Mz/Mw von 3 bis 40 aufweist.

8. Polyethylen-Zusammensetzung nach einem der vorstehenden Ansprüche, wobei das Basisharz ein Zugmodul, bestimmt gemäß ISO 527-2, von mehr als 920 MPa aufweist.

9. Polyethylen-Zusammensetzung nach einem der vorstehenden Ansprüche, wobei das Basisharz eine Reißfestigkeit, bestimmt gemäß ISO 527-2, von mehr als 23 MPa aufweist.

10. Polyethylen-Zusammensetzung nach einem der vorstehenden Ansprüche, wobei das Basisharz eine Bruchdehnung, bestimmt gemäß ISO 527-2, von mehr als 300 aufweist.

11. Polyethylen-Zusammensetzung nach einem der vorstehenden Ansprüche, wobei das Basisharz eine Charpy-Kerbschlagzähigkeit bei +23 °C, bestimmt gemäß ISO 179/1eA, von mehr als 10,0 kJ/m$^2$ aufweist.

12. Verfahren zum Erzeugen einer Polyethylen-Zusammensetzung gemäß einem der vorstehenden Ansprüche, wobei das Basisharz in einem mehrstufigen Polymerisationsprozess in Anwesenheit eines Ziegler-Natta-Katalysators erzeugt wird.

13. Artikel, der die Polyethylen-Zusammensetzung gemäß einem der Ansprüche 1 bis 11 umfasst.

14. Artikel nach Anspruch 13, der ein Formkörper oder eine Folie ist.

15. Verwendung einer Polyethylen-Zusammensetzung gemäß einem der Ansprüche 1 bis 11 für das Erzeugen eines Artikels, der vorzugsweise ein Formkörper oder eine Folie ist.

**Revendications**

1. Composition de polyéthylène comprenant une résine de base comprenant

(A) 70 à 30 % en poids d'une fraction homo- ou copolymère de polyéthylène par rapport au poids total de la résine de base ayant une densité déterminée selon la norme ISO 1183-1:2004 (méthode A) de 955 à 980 kg/m$^3$ et un MFR2 déterminé selon la norme ISO 1133 à 190 °C et une charge de 2,16 kg de 50 à 600 g/10 min ;
(B) 30 à 70 % en poids d'une fraction homo- ou copolymère de polyéthylène par rapport au poids total de la résine de base ayant une densité déterminée selon la norme ISO 1183-1:2004 (méthode A) de 947 à 970 kg/m$^3$ et un MFR2 déterminé selon la norme ISO 1133 à 190 °C et une charge de 2,16 kg de 0,0001 à 1,0 g/10 min ;
le poids moléculaire moyen de la fraction (A) étant inférieur au poids moléculaire moyen de la résine de base ;
la somme des quantités de fraction (A) et fraction (B) étant de 100 % en poids par rapport au poids total de la résine de base ;
la résine de base ayant une densité déterminée selon la norme ISO 1183-1:2004 (méthode A) de 957 à 970 kg/m$^3$.

2. Composition de polyéthylène selon la revendication 1, la résine de base ayant une densité déterminée selon la norme ISO 1183- 1:2004 (méthode A) de 958 à 962 kg/m$^3$.

**3.** Composition de polyéthylène selon l'une quelconque des revendications précédentes, la résine de base ayant un MFR2 déterminé selon la norme ISO 1133 à 190 °C et à une charge de 2,16 kg de 0,9 à 4,0 g/10 min.

**4.** Composition de polyéthylène selon l'une quelconque des revendications précédentes, la différence entre la densité déterminée selon la norme ISO 1183-1:2004 (méthode A) de la fraction (A) et la densité déterminée selon la norme ISO 1183-1:2004 (méthode A) de la fraction (B) étant comprise entre 0,1 et 30 kg/m$^3$.

**5.** Composition de polyéthylène selon l'une quelconque des revendications précédentes la résine de base ayant un poids moléculaire moyen z Mz de 300 000 à 900 000 g/mol.

**6.** Composition de polyéthylène selon l'une quelconque des revendications précédentes, la résine de base ayant un poids moléculaire moyen en poids Mw de 90 000 à 200 000 g/mol.

**7.** Composition de polyéthylène selon l'une quelconque des revendications précédentes, la résine de base ayant de préférence un rapport Mz/Mw de 3 à 40.

**8.** Composition de polyéthylène selon l'une quelconque des revendications précédentes, la résine de base ayant un module d'élasticité en traction déterminé selon la norme ISO 527-2 de plus de 920 MPa.

**9.** Composition de polyéthylène selon l'une quelconque des revendications précédentes, la résine de base ayant une résistance à la traction à la rupture déterminée selon la norme ISO 527-2 de plus de 23 MPa.

**10.** Composition de polyéthylène selon l'une quelconque des revendications précédentes, la résine de base ayant un allongement à la rupture déterminé selon la norme ISO 527-2 de plus de 300.

**11.** Composition de polyéthylène selon l'une quelconque des revendications précédentes, la résine de base ayant une résistance au choc sur éprouvette entaillée Charpy (NIS) à +23 °C déterminée selon la norme ISO 179/1eA supérieure à 10,0 kJ/m$^2$.

**12.** Procédé de production d'une composition de polyéthylène selon l'une quelconque des revendications précédentes, dans lequel la résine de base est produite dans un procédé de polymérisation en plusieurs étapes en présence d'un catalyseur Ziegler-Natta.

**13.** Article comprenant la composition de polyéthylène selon l'une quelconque des revendications 1 à 11.

**14.** Article selon la revendication 13, qui est un article moulé ou un film.

**15.** Utilisation d'une composition de polyéthylène selon l'une quelconque des revendications 1 à 11 pour la production d'un article, de préférence d'un article moulé ou d'un film.

**REFERENCES CITED IN THE DESCRIPTION**

**Patent documents cited in the description**

- WO 2014180989 A1
- WO 2017093390 A1
- WO 2019229209 A1
- US 4582816 A
- US 3405109 A
- US 3324093 A
- EP 479186 A
- US 5391654 A
- WO 2006063771 A1
- EP 428054 A1
- EP 1378528 A1
- EP 688794 A
- WO 9951646 A
- WO 0155230 A
- WO 2005118655 A
- EP 810235 A
- WO 2014096296 A
- WO 2016097193 A